# EUROPEAN PATENT APPLICATION

(11) **EP 4 641 373 A1**
(43) Date of publication of application: **29.10.2025**
(21) Application number: 23905869.6
(22) Date of filing: 18.12.2023
(51) Int. Cl.: G06F 9/445

(54) **MICROSCOPE CONFIGURATION METHOD AND MICROSCOPE SYSTEM**

(30) Priority: 22.12.2022 CN 202211657317
(71) Applicant: Leica Microsystems CMS GmbH, 35578 Wetzlar (DE)
(72) Inventor: JIAO, Linqi, 35578 Wetzlar (DE)
(74) Representative: Schaumburg und Partner Patentanwälte mbB
(86) International application number: PCT/CN2023/139403
(87) International publication number: WO 2024/131705

(57) **Abstract**

The present invention discloses a microscope configuration method and a microscope system wherein configuration information is visualized based on a display connected to a microscope, the configuration method comprising determining a target accessory, said display showing a first human-machine interface corresponding to said target accessory, said first interface having one or more controls corresponding to said target accessory; setting configuration item information for said controls; associating said controls with said configuration item information, and generating and storing an association record for said controls. The microscope configuration method provided by the present invention is simple to operate, does not require the user to memorize the positional relationship between the target accessory and the microscope, and enables fast and accurate setting of configuration item information for the target accessory by means of guidance information on the display.

## Description

### Technical Field

The invention relates to microscopy, in particular it relates to a configuration method and microscope system.

### Background

A microscope is a device used to capture microscopic images and is widely used in the fields of life sciences, surface science and materials science. In the field of life sciences, it is often necessary to configure different objectives for microscopes in order to observe target objects, for example, to observe two-dimensional cell cultures. Therefore, when using some microscopes, manual configuration of objectives or other accessories is unavoidable.

In practice, users can only configure one objective/accessory for one position at a time. In the prior art, the design of the hardware and software of the microscope system requires users to remember the position numbers of each objective/accessory configuration, then open the configuration page in the software and enter the corresponding information. Therefore, the configuration methods of microscopes in the prior art have at least the following insufficiency:
(1) The software of microscope systems does not support users in obtaining real-time, effective configuration guidance directly from the software user interface;
(2) Users need to remember the position numbers of the hardware and then enter the objective/accessory information of the corresponding position numbers in the software, which makes it difficult to ensure the accuracy of the user configuration;
(3) Configuring objectives/accessories typically requires users to perform numerous steps and complex operations, which means that the entire process takes a long time and may be difficult for beginners to complete successfully;
(4) After configuration, if the user forgets the positional relationship between the objective/accessory and the microscope during use, the prior art microscope system does not support users in quickly obtaining relevant information directly from the software user interface.

The disclosure of the above background technology is provided solely for the purpose of assisting in understanding the inventive concept and technical solutions of the present invention. It does not necessarily constitute prior art of the present patent application, nor does it necessarily provide technical guidance. In the absence of clear evidence that the above content was publicly disclosed prior to the filing date of this patent application, the above background technology should not be used to evaluate the novelty and inventive step of this application.

### Summary

The purpose of the present invention is to provide a microscope configuration method having visual guidance, which makes configuration operations convenient and facilitates the verification of accessory information during imaging by the microscope system.

To achieve the above objective, the technical solution adopted by the present invention is as follows:
A microscope configuration method wherein configuration information is visualized based on a display connected to a microscope, the configuration method comprising:
determining the target accessory, the display showing the first human-machine interface corresponding to the target accessory, the first interface having one or more controls corresponding to the target accessory;
setting configuration item information for the control;
associating the target accessory corresponding to the control with the configuration item information, generating and storing an association record.

Further, any one of the above-mentioned technical solutions or a combination thereof may be used to set configuration item information for the control by the following methods:
Operating the control to jump to the second interface, which a plurality of configuration items corresponding to the control are displayed on the second interface;
performing a first operation on one of the configuration items, wherein the information of the operated configuration item is used as the configuration item information set for the control.

Further, any one of the above-mentioned technical solutions or a combination thereof may be used to perform a second operation on the configuration items in the second interface to view the detailed information of the configuration items.

Further, based on any one of the above-mentioned technical solutions or a combination thereof, if the number of target accessories is single, the first interface displays one control;
If the number of target accessories is greater than one, the first interface is provided with multiple controls in one-to-one correspondence with accessories, and only the control corresponding to the currently configured accessory is operable, while the operability of other controls is disabled.

Further, based on any one of the above-mentioned technical solutions or a combination thereof, the configuration item information is set to the control by manual input.

Further, based on any one of the above-mentioned technical solutions or a combination of multiple technical solutions, the first interface further displays a microscope structure diagram, and the first interface is configured to highlight the target accessory in the microscope structure diagram.

Further, based on any one of the above-mentioned technical solutions or a combination of multiple technical solutions, the first interface also displays operating instructions for guiding an operator in setting configuration item information for the control.

Further, any one of the above-mentioned technical solutions or a combination thereof may be used to configure accessories on the entity microscope that are consistent with the configuration item information set for the control.

Further, any one of the above-mentioned technical solutions or a combination thereof may be used to determine an accessory that is most recently operated on the entity microscope as the target accessory;
Alternatively, the target accessory is determined according to a base that is most recently operated on the entity microscope, wherein the base is configured to load the accessory(s); or
Alternatively, a third interface configured with option keys corresponding to respective accessories is displayed on the display, and the target accessory is determined based on a selection operation of the option keys.

Further, based on any one of the above-mentioned technical solutions or a combination thereof, the target accessory is an objective, and the configuration item information includes the identification number of the objective and/or the attribute information of the objective.

Further, any one of the above-mentioned technical solutions or a combination thereof also includes:
obtaining information about the currently in-use accessory and the current imaging mode of microscope;
matching the configuration item information associated with the currently in-use accessory;
determining, according to the configuration item information, whether the currently in-use accessory supports the current the imaging mode of microscope and, if not, sending prompt information.

Further, any one of the above-mentioned technical solutions or a combination thereof may be used to obtain the current turret position of the phase turret and send prompt information if the turret position does not match the current image mode of microscope..

Further, any one of the above-mentioned technical solutions or a combination thereof may be used to display the prompt information on the display, and/or, display operating instructions on the display to change to an accessory configuration that supports the current imaging mode of the microscope..

Further, based on any one of the above-mentioned technical solutions or a combination thereof, if the currently in-use accessory does not support the current imaging mode of the microscope, the display shows a diagram of the microscope structure marked with the accessories that do not support the imaging mode and/or operating instructions with an image indicative of the operating steps;
and/or, after replacing an accessory that does not support the current microscope imaging mode with an accessory that supports the image mode, the display shows prompt information that the configuration is successful.

Further, any one of the above-mentioned technical solutions or a combination thereof also includes:
initiating a reproduction instruction based on a microscopic image;
obtaining the pre-stored accessory configuration parameters associated with the microscopic image;
in accordance with at least one of the accessory configuration parameters associated with the microscopic image, making a prompt for guiding a user to reproduce the configuration corresponding to that parameter.

Further, based on any one of the above-mentioned technical solutions or a combination thereof, a prompt for guiding a user to reproduce the configuration corresponding to the parameter comprises: displaying text and/or graphics for the operating instructions by means of a display, and/or playing audio signals for the operating instructions by means of a speaker.

According to another aspect of the present invention, there is provided a microscope configuration method comprising
obtaining accessory information in current use and the current imaging mode information of the microscope, wherein the respective accessory is pre-recorded in its associative relationship with the corresponding configuration item information
matching the configuration item information associated with the currently in-use accessory; and
determining, according to the configuration item information, whether the currently in-use accessory supports the current imaging mode of microscope, if not, sending prompt information..

Further, based on any one of the above-mentioned technical solutions or a combination thereof,
the associative relationship with the corresponding configuration item information is pre-recorded in the following manner:
determining the target accessory, displaying to the first human-machine interface corresponding to the target accessory, wherein the first interface is configured with one or more controls corresponding to the target accessory;
setting configuration item information for the control;
associating the accessory corresponding to the control with the configuration item information, generating and storing an association record.

According to another aspect of the present invention, there is provided a microscope system comprising
a microscope, a display and a processor, wherein the processor is configured to determine a target accessory and to generate the first human-machine interface corresponding to the target accessory, wherein the first interface is configured with one or more controls corresponding to the target accessory;
the display is configured to display the first interface and receive configuration item information set for the control;
the processor associates the target accessory corresponding to the control with the configuration item information, generating and storing an association record..

According to another aspect of the present invention, there is provided a microscope system comprising
microscope and a processor, wherein the processor is configurd to:
obtaining information about the currently in-use accessory and information about the current image mode of microscope, wherein an association relationship between each accessory and corresponding configuration item information is prerecored;
match the configuration item information associated with the currently in-use accessory; and
determine, according to the configuration item information, whether the currently in-use accessory supports the current imaging mode of the microscope, if not, generating prompt information.

According to another aspect of the present invention, there is provided a computer program product storing executable program code, performing a microscope configuration method described above when the program code is run on a processor.

The beneficial effects brought by the technical solution provided by the present invention are as follows:
a. The microscope configuration method provided by the present invention is simple to operate, provides a visual interface with a diagram of the structure of the microscope to indicate the position of the accessory on the microscope during configuration of the target accessory by the user, and is only operable by means of controls corresponding to the target accessory currently being configured, preventing misconfiguration of the accessory with the controls;
b. The use of the display to show the text and/or graphics for the operating instructions allows the user to accurately complete the configuration of the target accessory as guided by the operating instructions when setting the configuration item information for the target accessory;
c. The microscope configuration method provided by the present invention is capable of reporting errors for the microscope imaging in the event that the current accessory does not match the imaging mode, and providing the user with guidance for configuring a compatible accessory;
d. When reproducing an accessory configuration parameter corresponding to a microscopic image capture, the user can be guided in reproducing the configuration operation corresponding to the parameter by means of an audible prompt or a display of the text and/or graphics for the operating instructions.

### Short Description of the Figures

In order to more clearly illustrate the technical solutions in the embodiments of the present application or the conventional technical solutions, the drawings required for use in the description of the embodiments or the conventional technical solutions will be briefly introduced below. Obviously, the drawings described below are only some embodiments recorded in the present application. For ordinary technicians in this field, other drawings can be obtained based on these drawings without the need for any creative work.
Figure 1 is a schematic diagram of the first interface during configuration of the first objective, provided by an exemplary embodiment of the present invention;
Figure 2 is a schematic diagram of the second interface corresponding to the objective configuration, provided by an exemplary embodiment of the present invention;
Figure 3 is a schematic diagram of the first interface after all four objectives have been configured, provided by an exemplary embodiment of the present invention;
Figure 4 is a schematic diagram of the display prompting that the currently used objective does not support the imaging mode, provided by an exemplary embodiment of the present invention;
Figure 5 is a schematic diagram of the operating instruction interface guiding the user through changing the objective, provided by a specific embodiment of the present invention;
Figure 6 is a schematic diagram of the interface displayed after successful configuration as guided by Figure 5;
Figure 7 is a schematic diagram of a prompt interface indicating that the current turret position of the phase turret does not match the imaging mode, provided by a specific embodiment of the present invention;
Figure 8 is a schematic diagram of the operating instruction interface guiding the user through adjusting the turret position of the current phase turret, provided by a specific embodiment of the present invention;
Figure 9 is a schematic diagram of the interface displayed after successful configuration as guided by Figure 8;
Figure 10 is a schematic diagram of the schematic diagram of the microscope structure provided by a specific embodiment of the present invention;
Figure 11 is a schematic diagram of the structure of a microscope system for performing the microscope configuration method described in an embodiment of the present invention;
Figure 12 is a flowchart of the microscope configuration method provided by a specific embodiment of the present invention.

List of Reference Signs: 100 - microscope system, 110 - microscope, 111 **-** display, 120 - computer system.

### Detailed Description

In order to enable those skilled in the art to better understand the present invention, the technical solutions in the embodiments of the present invention will be clearly and completely described below in conjunction with the drawings in the embodiments of the present invention. Obviously, the described embodiments are only part of the embodiments of the present invention, rather than all of the embodiments. Based on the embodiments of the present invention, all other embodiments obtained by ordinary technicians in this field without making any creative work should fall within the scope of protection of the present invention.

It should be noted that the terms "first", "second", etc. in the specification and claims of the present invention and the above-mentioned drawings are used to distinguish similar objects and are not necessarily used to describe a specific order or sequence. It is to be understood that the terms so used are interchangeable under appropriate circumstances such that the embodiments of the invention described herein are capable of being practiced in sequences other than those illustrated or described herein. In addition, the terms "comprises" and "having" and any variations thereof are intended to cover non-exclusive inclusions. For example, a process, method, apparatus, product or equipment that includes a series of steps or units is not necessarily limited to those steps or units explicitly listed, but may include other steps or units not explicitly listed or inherent to such process, method, product or equipment.

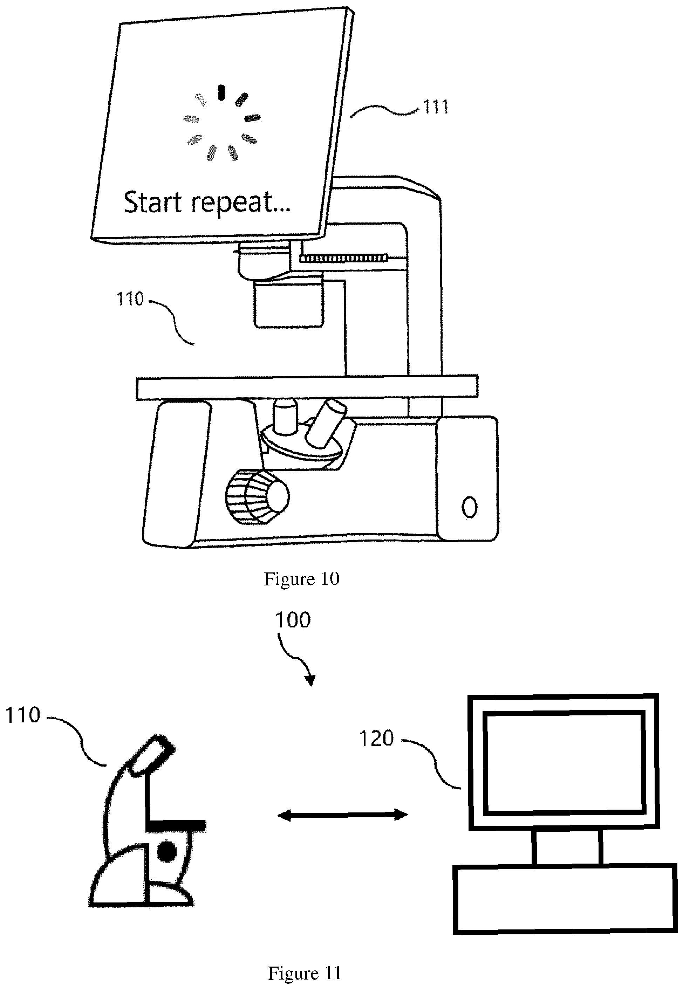

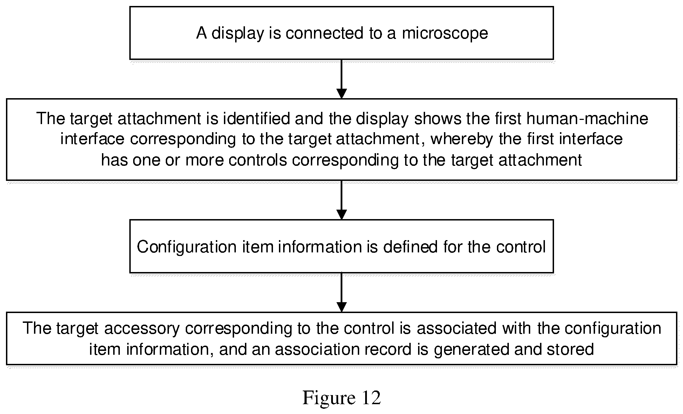

In an embodiment of the present invention, there is provided a microscope configuration method and a microscope system that visualizes configuration information on a display 111 connected to a microscope 110, with the structure being as shown in Figure 10 and the configuration method being as shown in Figure 12:
determining a target accessor, the display showing a first human-machine interface corresponding to the target accessory and the first interface having one or more controls corresponding to the target accessory;
setting configuration item information for the control;
associating the target accessory corresponding to the control with the configuration item information, generating and storing an association record.

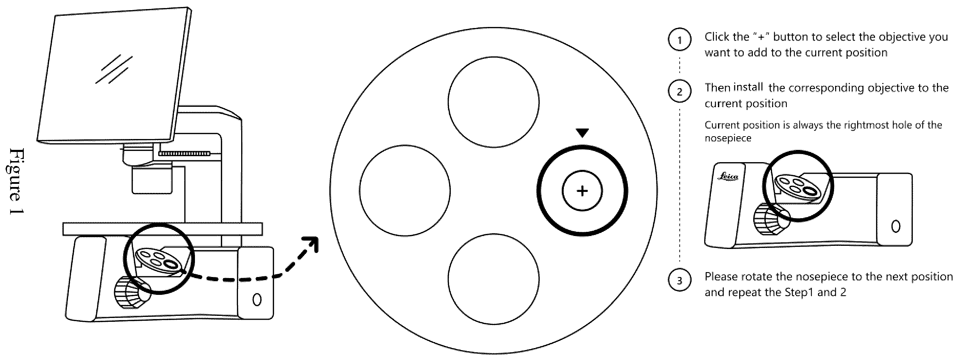

The following description first takes the objective as an example and combines Figures 1, 2 and 3 to explain in detail the configuration method for the objective.

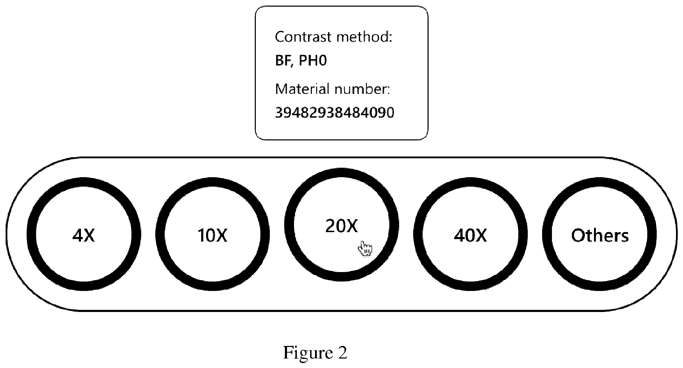

Figure 1 shows the first human-machine interface corresponding to the objective, using the nosepiece with four objective mounting holes as an example. The first interface shown in Figure 1 depicts a large circle containing four small circles. These four small circles serve as controls corresponding to the four objectives. By operating the controls, the configuration information can be set. Specifically, clicking the '+' in the small circle will jump to the second interface shown in Figure 2, which displays multiple configuration items corresponding to the control. The second interface displays information about multiple configuration items corresponding to the control. The configuration item information for the objective includes the objective identification number and/or the objective attribute information (e.g. magnification). In a specific embodiment, the second interface can be set so that the corresponding objective magnification information is displayed directly on the configuration item button. When an operation is performed on one of the configuration item buttons (e.g. the mouse is hovered over one of the configuration item buttons or the right mouse button is clicked), a pop-up window appears displaying specific information, such as the identification number and supported imaging mode, which keeps the second interface clean and concise. The main configuration buttons can also be displayed in the second interface, while other configuration buttons can be hidden and only displayed when the "others" button is clicked. When a different type of operation (e.g. single click, multiple clicks or click and hold) is performed on one of the configuration item buttons, the configuration item information corresponding to that configuration item button is set as the configuration item information for the '+' control on the right side of Figure 1. Further, the user should install the objective that corresponds to the configuration item information selected in the second interface in the entity microscope, and after the installation is complete, the microscope system associates the installed objective with the configuration item information selected in the second interface and stores a record of the association between the two.

As shown in Figure 1, there are four controls, with only the small circle on the right having a '+' sign. This configuration ensures that only the control corresponding to the currently configured objective is operable, while the operability of the other three controls is disabled. This foolproof design eliminates the need for operators to memorize the association between the target objective and the corresponding control. It also prevents human error during operation, such as accidentally associating the configuration item information of the current setting with the objective in another position. In Figure 1, the left side of the first interface also displays a diagram of the microscope structure highlighting the position of the objective so that users can easily identify the location of the accessories currently configured on the microscope. The right side of the first interface in Figure 1 also displays instructions guiding the operator in setting configuration item information for the controls, such as steps 1, 2 and 3 shown in Figure 1, which prompt the user to set configuration item information. This allows even those who have never used a microscope before to easily set configuration item information for the target accessories. In addition, the microscope system can show the text and graphics for the operating instructions shown in Figure 1 on the display and play the audio signals for the operating instructions by means of a speaker.

In addition to the method of redirecting to the second interface shown in Figure 2, it is also possible to manually input configuration item information. For example, in another specific embodiment of the present invention, clicking the '+' control in Figure 1 does not display the second interface shown in Figure 2, but instead displays an interface that requires the operator to manually input the configuration item information of the objective, such as a material number input box. The input configuration item information is then associated with the currently installed objective and the association record between the two is stored.

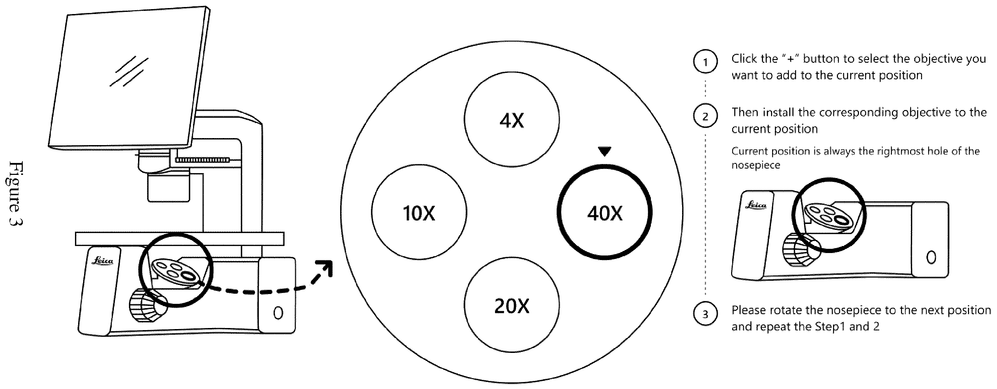

After the objective configuration for the current hole position is complete, the nosepiece can be rotated to expose the next hole position. At this point, a '+' sign will appear on the first interface shown in Figure 1 and the controls on the right side will be disabled. Once all four objectives are configured, the first interface displays the content shown in Figure 3.

The above description is only an example of the configuration process with the visualization guidance method using an objective. The configuration method of the present invention is not limited to configuring a single type of accessory, such as an objective, but can be configured for different types of accessories. The concept is to display the controls corresponding to the target accessory in the first interface, and operating the controls opens the second interface to set the corresponding configuration item information. After the configuration item information is confirmed, the association between the target accessory and the configuration item information is generated and stored. Therefore, the first step in configuration is to determine the configuration target. There are multiple ways to determine the configuration target (i.e. the target accessory). The first method is to determine the accessory currently being operated on the microscope as the target accessory. For example, in configuration mode, if the eyepiece is currently rotated, the eyepiece is determined to be the target accessory, and the display shows the first interface for configuring the eyepiece. The second method is for accessories such as objectives mounted on a base (i.e. a nosepiece). The target accessory can be determined based on the base used to load the accessory in the latest operation on the entity microscope. For example, in configuration mode, the nosepiece of the microscope is rotated to determine that the target accessory is an objective. Accordingly, the display shows the first interface for configuring the objective (Figure 1). The third method involves first operating the human-machine interface to enter configuration mode, whereby the display shows the third interface (not shown). The third interface can specifically configure multiple option keys corresponding to target accessories. The third interface serves as the human-machine interface for users to select target accessories, for example, displaying: "Please click on the following options to select the corresponding accessory for configuration." The specific option keys may include but are not limited to objectives, eyepieces, stands, stages, focusing systems, condensers, condenser lenses and light sources. When one of the option keys is clicked, the first interface corresponding to the selected accessory is opened.

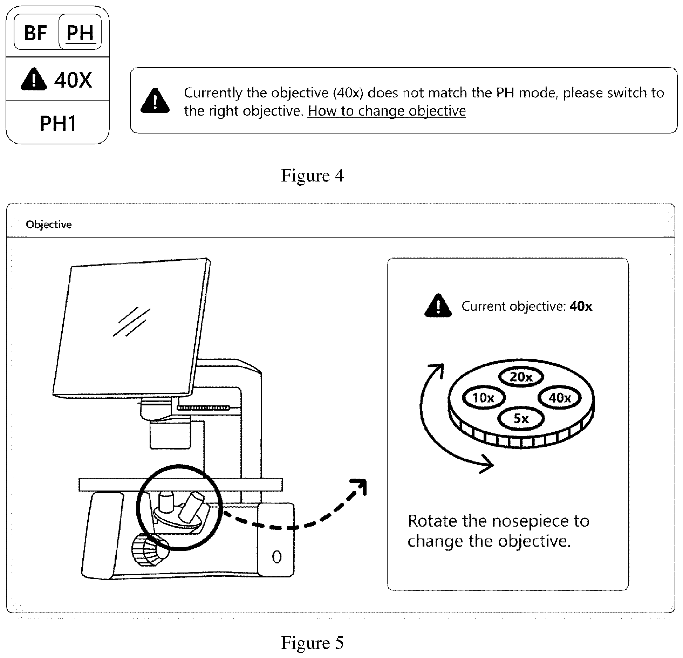

Based on the association between the target accessory and configuration item information obtained during the microscope configuration process, it is possible to verify whether the current accessory information matches the current imaging mode of the microscope during the imaging process. If they do not match, the user is guided to select the correct accessory. This is shown in Figures 4 to 9. The microscope system is capable of determining the current hole position of the nosepiece. By combining this information with the association between the target accessory and configuration item information, the system can obtain the configuration item information of the currently used objective and directly or indirectly match the magnification information, supported imaging modes, and other relevant information about the objective. The microscope system also has the ability to detect the current turret position, thereby determining whether the current phase turret is in bright-field mode (BF) or phase contrast mode (PH). Specifically, bright-field mode (BF) is matched with the BF position on the microscope phase turret, and phase contrast mode (PH) is matched with the PH0 or PH1 position on the phase turret. The configuration item information is associated with the currently used accessory. Based on the configuration item information, the system determines whether the currently used accessory supports the current microscope imaging mode and, if it does not support it, issues prompt information; and/or the system determines whether the current turret position matches the current microscope imaging mode and, if they do not match, issues prompt information. Preferably, if the currently used accessory does not support the current microscope imaging mode, the display shows a diagram of the microscope structure marked with the accessories that do not support the imaging mode and/or operating instructions with illustrative images of the operating steps.

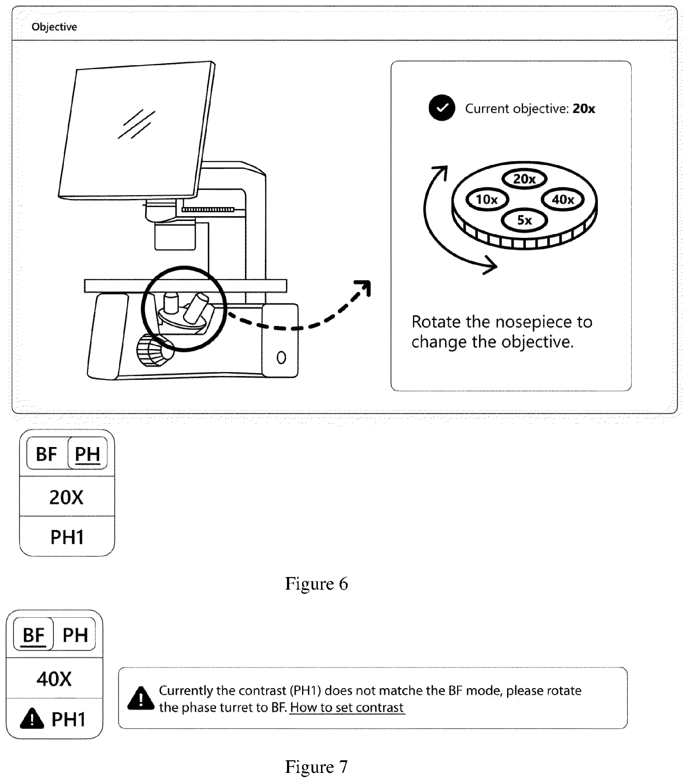

In Figure 4, the currently used objective is 40×, the set imaging mode is PH mode and the current imaging hole of the phase turret is position PH1. The system determines that the currently used 40× objective does not support the current PH mode and issues prompt information for "40×", whereby the prompt in the message bar informs the user that the current 40× objective does not support PH mode and instructs them to switch to the correct objective. In addition, a link to a guided set-up interface can be displayed. For example, if the user clicks (or any other reasonable operation) on the "how to change" link in the prompt information shown in Figure 4, the interface switches to the guided operation interface shown in Figure 5, which specifically displays a diagram of the microscope structure and operating instructions with schematic diagrams of operating steps for the nosepiece that does not support the imaging mode. The operating instructions shown in Figure 5 prompt the user to rotate the nosepiece to change the currently used objective: "Rotate the nosepiece to change the objective." When the user replaces the currently used objective with the correct objective (20× objective) in accordance with the operating instructions shown in Figure 5, the interface switches to the interface shown in Figure 6, which displays prompt information of successful configuration (√), informing the user that the 20× objective is the correct objective and matches the current imaging mode.

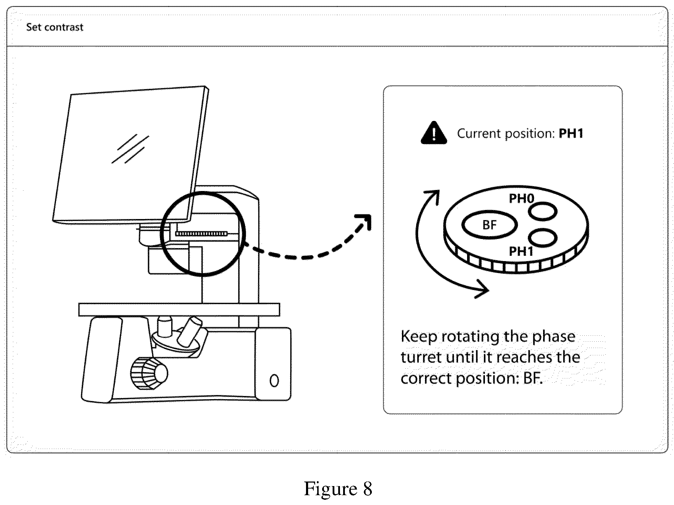

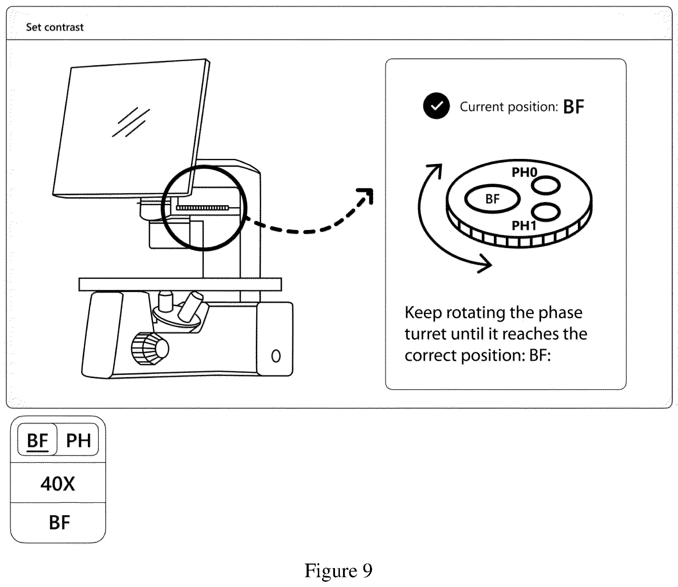

In Figure 7, the currently used objective is 40×, the set imaging mode is bright-field mode (BF) and the current imaging hole of the phase turret is position PH1. The system determines that the current PH1 position of the phase turret does not match the selected bright-field mode (BF) and issues prompt information for the current PH1 position of the phase turret, as shown in Figure 7, whereby a triangle with an exclamation mark is displayed on the left side of "PH1". The prompt in the message bar informs the user that the current PH1 turret position of the phase turret does not match BF mode and needs to be switched to the correct turret position that matches BF. In addition, when the user clicks (or any other reasonable operation) on the "how to change" link in the prompt information, the interface switches to the guided operation interface shown in Figure 8, which specifically displays a diagram of the microscope structure for the phase turret that does not match the imaging mode and operating instructions with schematic diagrams of operating steps. The operating instructions shown in Figure 8 prompt the user to adjust the current turret position of the turret plate by rotating it: "Keep rotating the phase turret until it reaches the correct position: BF." When the user follows the operating instructions shown in Figure 8 and rotates the phase turret to the BF position, the interface switches to the interface shown in Figure 9, which displays prompt information of successful configuration (√), informing the user that the current turret position is BF, which matches BF mode.

Figure 10 shows a schematic diagram for initiating reproduction instruction based on a microscopic image;
Obtaining the pre-stored accessory configuration parameters associated with the microscopic image;
In accordance with at least one of the accessory configuration parameters associated with the microscopic image, the display prompts the user to reproduce the configuration corresponding to the parameter by displaying text and/or graphics for the operating instructions; and/or the speaker plays audio signals for the operating instructions. The specific guidance interfaces are shown in Figures 1, 5 and 8, which combine microscope structure diagrams and operating instructions. This information is not repeated here.

The present invention also provides a microscope system 100, as shown in Figures 10 and 11, the microscope system 100 comprising a microscope 110, a display 111 and a processor, the processor being configured to determine the target accessory and generate the first human-machine interface corresponding to the target accessory, the first interface having one or more controls corresponding to the target accessory. The display 111 is configured to display the first interface and receive configuration item information set for the control. The processor associates the target accessory corresponding to the control with the configuration item information, generates an association record and stores it.

The processor is further configured for the following:
Obtaining information about the currently used accessory and the current microscope imaging mode, the respective accessory being pre-recorded in its associative relationship with the corresponding configuration item information;
matching the configuration item information associated with the currently in-use accessory; and
determining, according to the configuration item information, whether the currently in-use accessory supports the current imaging mode of microscope, if not, sending prompt information.

The processor may be a processor in the computer system 120, which is configured with a computer program product storing executable program code. When the program code is run on the processor, the microscope configuration method described above is executed.

Some embodiments relate to a microscope comprising the application of a microscope configuration method. Optionally, the microscope may be part of or connected to a system performing the method in Figures 1-9. Figure 11 shows a schematic diagram of a microscope system 100 configured to perform the methods described in the present invention. System 100 includes a microscope 110 and computer system 120. Microscope 110 is configured to capture images and is connected to computer system 120. The computer system 120 is configured to perform at least a portion of the methods described in the present invention. The computer system 120 may be configured to execute machine learning algorithms. The computer system 120 and the microscope 110 may be separate entities but may also be integrated into a common housing. The computer system 120 may be part of a central processing system of the microscope 110 and/or the computer system 120 may be part of a subcomponent of the microscope 110, such as a sensor, an actuator, a camera or an illumination unit of the microscope 110.

Computer system 120 can be a local computer device having one or more processors and one or more storage devices (for example, a personal computer, laptop, tablet computer, or mobile phone), or it can be a distributed computer system (for example, having one or more processors and one or more storage devices distributed at various locations, such as a local client and/or one or more remote server sites and/or data centers). Computer system 120 may include any circuit or combination of circuits. In one embodiment, the computer system 120 may include one or more processors of any type. As used herein, a processor may refer to any type of computing circuit, such as, but not limited to, a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), a multi-core processor, a field programmable gate array (FPGA) such as a microscope or a microscope component (e.g., a camera), or any other type of processor or processing circuit. Other types of circuits that may be included in computer system 120 may be custom circuits, application specific integrated circuits (ASICs), and the like. For example, one or more circuits (for example, communications circuits) used in wireless devices such as mobile phones, tablet computers, laptop computers, two-way radios, and similar electronic systems. Computer system 120 may include one or more storage device, that may include one or more storage elements suitable for a particular application, such as main memory in the form of random access memory (RAM), one or more hard disk drives, and/or one or more drives for handling removable media such as compact disks (CDs), flash memory cards, or digital video disks (DVDs). Computer system 120 may further include a display device, one or more speakers, and a keyboard and/or controller, which may include a mouse, trackball, touch screen, voice recognition device, or any other device that allows a system user to input information to the computer system 120 or receive information from the computer system 120.

Some or all of the steps of the method may be performed by (or using) a hardware device (for example, a processor, a microprocessor, a programmable computer, or an electronic circuit). In some embodiments, such device may perform one or more of the most important steps of the method.

For certain implementation requirements, embodiments of the present invention may be embodied in hardware or in software. This embodiment may be performed using a non-transitory storage medium (for example, a digital storage medium, such as a floppy disk, DVD, Blu-ray, CD, ROM, PROM, EPROM, EEPROM or FLASH) having electronically readable control signals stored thereon. These electronically readable control signals cooperate (or are capable of cooperating) with a programmable computer system so that the corresponding method is implemented. Therefore, the digital storage medium may be computer readable.

Some embodiments of the present invention comprise a data carrier having electronically readable control signals. These electronically readable control signals are capable of cooperating with a programmable computer system, so that one of the methods described in the present invention is implemented.

Generally, embodiments of the present invention can be implemented as a computer program product with a program code. When the computer program product runs on a computer, the program code can run, so as to perform one of the methods. The program code may, for example, be stored on a machine-readable carrier.

Further embodiments comprise a computer program for performing one of the methods described in the present invention, stored on a machine-readable carrier.

In other words, an exemplary embodiment of the present invention is, therefore, a computer program, having a program code for performing, when the computer program runs on a computer, one of the methods described herein.

Thus, a further embodiment of the present invention is a storage medium (or a data carrier, or a computer-readable medium) comprising, stored thereon, a computer program. This computer program is used for performing one of the methods described herein, when the computer program is executed by a processor. The data carrier, the digital storage medium or the recorded medium are typically tangible and/or non-transitory. Yet another embodiment of the present invention is a device according to the present invention, comprising a processor and a storage medium.

Thus, a further embodiment of the present invention is a data stream or a sequence of signals representing the computer program for performing one of the methods described in the present invention. The data stream or sequence of signals may be configured, for example, to be transmitted via a data communication connection, via the Internet by way of example.

A further embodiment comprises a processing means, for example a computer or a programmable logic device, configured to or adapted to perform one of the methods described in the present invention.

A further embodiment comprises a computer. On the computer is installed the computer program for performing one of the methods described in the present invention.

A further embodiment of the present invention comprises an apparatus or a system configured to transfer (for example, electronically or optically) a computer program for performing one of the methods described in the invention, to a receiver. The receiver may be, for example, a computer, a mobile device, or a storage device. The apparatus or system may, for example, comprise a file server for transferring the computer program to the receiver.

In some embodiments, a programmable logic device (for example, a field programmable gate array) may be used to perform some or all of the functionalities of the methods described in the present invention. In some embodiments, a field programmable gate array may cooperate with a microprocessor in order to perform one of the methods described herein. Generally, the method is preferably performed by any hardware device.

It should be noted that, in this document, relational terms such as first and second, etc. are merely used to distinguish one entity or operation from another entity or operation, and do not necessarily require or imply any actual relationship or order between these entities or operations. Moreover, the terms "comprises," "comprising," or any other variations thereof are intended to cover non-exclusive inclusion, such that a process, method, article, or apparatus that includes a list of elements includes not only those elements but also other elements not expressly listed, or also includes elements inherent to such process, method, article, or apparatus. Without more constraints, an element defined by the phrase "comprising a..." does not exclude the existence of other identical elements in the process, method, article or apparatus comprising the element.

As used herein, the term "and/or" includes any and all combinations of one or more of the associated listed items and may be abbreviated as "/".

The above description is only a specific embodiment of the present invention. It should be pointed out that for ordinary technicians in this technical field, several improvements and modifications can be made without departing from the principles of this application. These improvements and modifications should also be regarded as the scope of protection of this application.

## Claims

1. A microscope configuration method, wherein configuration information is visualized based on a display connected to the microscope, the configuration method comprising:
determining a target accessor, the display showing a first human-machine interface corresponding to the target accessory and the first interface having one or more controls corresponding to the target accessory;
setting configuration item information for the control;
associating the target accessory corresponding to the control with the configuration item information, generating and storing an association record.

2. A microscope configuration method according to claim 1, wherein the configuration item information is set for the control by the following:
operating the control to jump to a second interface, wherein a plurality of configuration items corresponding to the control are displayed on the second interface;
performing a first operation on one of the configuration items, wherein the information of the operated configuration item is used as the configuration item information set for the control.

3. A microscope configuration method according to claim 1 or claim 2, further comprising: performing a second operation on the configuration items in the second interface to view the detailed information of the configuration items.

4. A microscope configuration method according to any one of claims 1 to 3, wherein if the number of target accessories is single, the first interface displays one control;
If the number of target accessories is greater than one, the first interface is provided with multiple controls in one-to-one correspondence with accessories, and only the control corresponding to the currently configured accessory is operable, while the operability of other controls is disabled.

5. A microscope configuration method according to any one of claims 1 to 4, wherein the configuration item information is set to the control by manual input.

6. A microscope configuration method according to any one of claims 1 to 5, wherein the first interface further displays a microscope structure diagram, and the first interface is configured to highlight the target accessory in the microscope structure diagram.

7. A microscope configuration method according to any one of claims 1 to 6, wherein the first interface further displays operating instructions for guiding an operator in setting configuration item information for the control.

8. A microscope configuration method according to any one of claims 1 to 7, further comprising:
Configuring accessories on the entity microscope that are consistent with the configuration item information set for the control.

9. A microscope configuration method according to any one of claims 1 to 8, comprising: determining an accessory that is most recently operated on the entity microscope as the target accessory; or
determining the target accessory according to a base that is most recently operated on the entity microscope, wherein the base is configured to load the accessory(s); or
displaying, on the display, a third interface configured with option keys corresponding to respective accessories, and determining the target accessory based on a selection operation of the option keys.

10. A microscope configuration method according to any one of claims 1 to 9, wherein the target accessory is an objective, the configuration item information includes the identification number of the objective and/or the attribute information of the objective.

11. A microscope configuration method according to any one of claims 1 to 10, further comprising:
obtaining information about the currently in-use accessory and the current imaging mode of microscope;
matching the configuration item information associated with the currently in-use accessory;
determining, according to the configuration item information, whether the currently in-use accessory supports the current the imaging mode of microscope and, if not, sending prompt information.

12. A microscope configuration method according to claim 11, further comprising:
obtaining the current turret position of the phase turret and sending prompt information if the turret position does not match the current image mode of microscope.

13. A microscope configuration method according to claim 11, further comprising:
displaying the prompt information on the display, and/or, displaying operating instructions on the display to change to an accessory configuration that supports the current imaging mode of the microscope.

14. A microscope configuration method according to claim 11, wherein if the currently in-use accessory does not support the current imaging mode of the microscope, the display shows a diagram of the microscope structure marked with the accessories that do not support the imaging mode and/or operating instructions with an image indicative of the operating steps;
and/or, after replacing an accessory that does not support the current microscope imaging mode with an accessory that supports the image mode, the display shows a prompt information that the configuration is successful.

15. A microscope configuration method according to any one of claims 1 to 14, further comprising:
initiating a reproduction instruction based on a microscopic image;
obtaining the pre-stored accessory configuration parameters associated with the microscopic image;
and in accordance with at least one of the accessory configuration parameters associated with the microscopic image, making a prompt for guiding a user to reproduce the configuration corresponding to that parameter.

16. A microscope configuration method according to claim 15, wherein a prompt for guiding a user to reproduce the configuration corresponding to the parameter comprises: displaying text and/or graphics for the operating instructions by means of a display, and/or playing audio signals for the operating instructions by means of a speaker.

17. A microscope configuration method ,compring:
obtaining accessory information in current use and the current imaging mode information of the microscope, wherein the respective accessory is pre-recorded in its associative relationship with the corresponding configuration item information
matching the configuration item information associated with the currently in-use accessory; and
determining, according to the configuration item information, whether the currently in-use accessory supports the current imaging mode of microscope, if not, sending prompt information.

18. A microscope configuration method according to Claim 17, wherein the associative relationship with the corresponding configuration item information is pre-recorded in the following manner:
determining the target accessory, displaying to the first human-machine interface corresponding to the target accessory, wherein the first interface is configured with one or more controls corresponding to the target accessory;
setting configuration item information for the control;
associating the accessory corresponding to the control with the configuration item information, generating and storing an association record.

19. A microscope system comprising a microscope, a display and a processor, wherein the processor is configured to determine a target accessory and to generate the first human-machine interface corresponding to the target accessory, wherein the first interface is configured with one or more controls corresponding to the target accessory;
the display is configured to display the first interface and receive configuration item information set for the control;
the processor associates the target accessory corresponding to the control with the configuration item information, generating and storing an association record.

20. A microscope system comprising a microscope and a processor, wherein the processor is configurd to:
obtaining information about the currently in-use accessory and information about the current image mode of microscope, wherein an association relationship between each accessory and corresponding configuration item information is prerecored;
match the configuration item information associated with the currently in-use accessory; and
determine, according to the configuration item information, whether the currently in-use accessory supports the current imaging mode of the microscope, if not, generating prompt information. .

21. A computer program product storing executable program code for performing a microscope configuration method as claimed in any one of claims 1 to 18 when the program code is run on a processor.
